# EUROPEAN PATENT APPLICATION

(11) **EP 4 555 900 A1**
(43) Date of publication of application: **21.05.2025**
(21) Application number: 24198668.6
(22) Date of filing: 05.09.2024
(51) Int. Cl.: A47C 27/12, A47C 31/00, B68G 11/03, B32B 5/02

(54) **AN EXTERNAL COMFORT LAYER FOR COVERING A READY-TO-USE SLEEPING SUPPORT ITEM**

(30) Priority: 15.11.2023 NL 2036278
(71) Applicant: F-mattress products Trading und Treuhand GmbH, 41812 Erkelenz (DE)
(72) Inventor: Reutelingsperger, Christiaan M. H. G., 41812 Erkelenz (DE)
(74) Representative: Ter Meer Steinmeister & Partner

(57) **Abstract**

The present invention pertains to an external comfort layer for covering a horizontally extending top surface of a ready-to-use sleeping support item, the external comfort layer comprising a porous polyester core (5) having a porosity of at least 85% and having pores that are open towards a top surface of the said core (5), and a continuous polyester sheeting (4) covering the top surface of the porous polyester core (5), the polyester sheeting (4) having polyester yarns that extend in the horizontal direction, and wherein both the porous polyester core (5) and the continuous polyester sheeting (4) are polyethylene terephthalate (PET) materials.

## Description

### Field of the invention

The present invention pertains to an external comfort layer for covering a horizontally extending top surface of a ready-to-use sleeping support item, such as a mattress (to support a body as a hole) or a pillow (to support the head of a person). Typically, such a comfort layer is used on top of sleeping support item to protect this item from stains, internal moist build up and sagging, but also, it may increase the lying comfort as experienced by a person lying on the sleeping support item. A comfort layer in the sense of the present invention is not a mattress or pillow as such since it does not provide enough support to act as the primary sleeping support item, but is added as an extra external layer to such a ready-to-use sleeping support item.

### Background of the invention

Sleep plays a vital role in good health and well-being throughout life of any person. Getting enough quality sleep at the right times can help protect the mental health, physical health, quality of life, and safety of a person. It has been known for a long time that during sleep, the body is working to support healthy brain function and maintain physical health. The damage from sleep deficiency can occur in an instant (such as a car crash), or it can harm over time. For example, ongoing sleep deficiency can raise the risk for some chronic health problems. It also can affect how well one thinks, reacts, works, learns, and gets along with others.

That is why there is a continuous search for way to improve comfort during sleep.

Already since prehistoric times, the concept of using a sleeping support such as a mattress or pillow has been used to provide comfort during sleep. By lying on piles of leaves, straw, and animal skins, early humans were able to sleep more comfortably and more soundly than they could have on hard surfaces. As greater numbers of people left a nomadic, hunting existence for a settled, agrarian lifestyle, primitive furnishings, including the bed, began to develop. Over the centuries however, mattresses, pillows etc, themselves remained unsophisticated. Until the twentieth century, pillows were simply sacks filled with feathers or straw, whereas mattresses generally consisted of lumpy pads filled with horse hair, cotton, or rags. Mattresses with stabilizing interior springs, probably the most significant advance in mattress design, were first developed during the mid-1800s. By placing a set of uniform springs inside one or more layers of upholstery, mattresses could be made a firm, resilient, and uniform texture.

The core of a ready-to-use sleeping item is typically provided with a cover, which may or may not be removable for washing purposes. For a mattress, such a layer is called a ticking, an upholstery layer to provide more comfort. This layer (which in itself may comprise multiple separate layers, or multiple lateral segments) is affixed to the core and determines in essence the hand or feel of the mattress. For this typically a first layer, called the insulator, is fitted directly onto the core and prevents the next layer, the cushioning, from moulding to the coils (in case of a spring mattress). While the insulator is fairly standard, the number of cushioning layers can vary widely in number, ranging from two to eight layers and from 0.5 to 5 centimetres in thickness. Also, the comfort layer may be non-uniform to create a local fine tuning of the hand of the mattress. Moving outward, the next component may be the flanges, i.e. connecting panels that are attached to the mattress's quilted cover with large, round staples called hogs rings. The top, bottom, and side panels of the mattress are stitched together with border tape.

An important aspect of a comfortable sleeping support item is its ability to locally absorb moist. People tend to lose a substantial amount of moist in the form of sweat while sleeping on a mattress. That is why cores of pillows, mattresses etc. are typically porous (i.e. they have voids that allow a liquid to be taken up by the core). This enables moist to easily penetrate the support item and make sure the top surface does not attain a wet feel. However, problems may arise when people sweat heavily, urinate, or do not move enough while sleeping: Moist than builds up at particular sites in the core which may become locally saturated, ultimately leading to a wet feel at the outer surface of the support item at these sites.

A solution proposed in the art is to try and prevent that moist can enter into the porous core by using a barrier layer, for example an external rubbery sheeting. This way, moist stays on the outer surface and may be removed automatically by evaporation or simply taking away using a towel. However, this is only a solution for people that have a (very) low level of sweating. Next to this, such a barrier layer decreases the sleeping comfort: An outer barrier layer actually gets wet during sleeping which is very uncomfortable when trying to get back to sleep again in the night. Even when such a barrier is built in the support item, such as a barrier in the ticking of the mattress, such a barrier increases the local tension in the top layer of the mattress when it deforms locally.

A different solution therefore is the use of a separate external comfort layer for covering a top surface of a ready-to-use sleeping support item, the external comfort layer comprising a resilient core for comfort and an outer layer for preventing moist to absorb the core and to spread the moist over the surface. An example of such a comfort layer is described in US 8,181,293. As the '293 patent describes, the comfort layer may be attached to the upper deck of the mattress by a releasable fastener, such as a zipper, and can be washed multiple times. The removable comfort layer, also denoted as a topper when used in conjunction with a mattress, is implemented as a padded upholstery layer with a quilted top that represents the actual sleeping surface. This quilted top is made from a water repellent fabric, such as the CoolMax^{®} material available from the Invista Company. CoolMax^{®} is a tetra-channel polyester, which pulls, or "wicks", moisture away from the user's skin. The larger surface area of the tetra-channel fibre is understood to cause moisture to evaporate quickly and roll or shed from the fibre more quickly than other hydrophobic fibres. However, there is still a local moist build up and for higher amounts of locally produced liquid (for example saliva at the location of the mouth, sweat at certain locations, urine etc), the evaporation is too slow to keep up with the incoming amount of liquid.

### Object of the invention

It is an object of the invention to provide a solution that provides more comfort, in particular in the prevention of local moist build up.

### Summary of the invention

In order to meet the object of the invention, an external comfort layer has been devised as outlined here above in the section titled "Field of the invention", which external comfort later is improved in that the layer comprises a porous polyester core having a porosity of at least 85% (with a practical maximum of 99%, above that porosity the mechanical integrity is typically too low to provide for a long-term durable core) and having pores that are open towards a top surface of the said core, and a continuous polyester sheeting covering the top surface of the porous polyester core, the polyester sheeting having polyester yarns that extend in the horizontal direction (not excluding that these yarns also at least partially extend in other directions) and wherein both the polyester core and the polyester sheeting are polyethylene terephthalate (PET) materials, i.e. the core and sheeting are made of polyethylene terephthalate (PET) materials.

Surprisingly, despite the fact that polyester is a hydrophobic material, it was found that when there is an underlying porous polyester core with pores which open to the polyester sheeting at the top of the core, in combination with a minimal porosity of 85%, moist is absorbed into the comfort layer quite effectively, in particular when both the core and the sheeting are made of PET material (not excluding different types of PET being present; e.g. different molecular weights, different monomers, etc). PET was found to be a polyester material that has the right balance in strength, feel and moist repelling/transporting properties for use according to the present invention. Due to the fact that the yarns in the sheeting extend in horizontal direction, moist is effective transported along the yarns away from the site where the liquid is or was produced. This way, even at a high rate of liquid being produced, leading to a locally high liquid "pressure", the moist is effectively transported away from this site leading to a more comfortable feeling and hence better sleeping process.

It is not 100% clear why the current solution is effective, but is it believed that the combination of a high local liquid pressure and the fact that PET, although classified as being hydrophobic, still is hydrophilic to the exact required level, together with the combination of not only a polyester sheeting but also a polyester core which due to its pores and minimal porosity also mechanically draws liquid into the top layer, provides for the high level liquid absorbing effect. It appears to be an exact balance between these properties that allow for the great sleeping comfort, in particular regarding the absorption and transport of bodily fluids, in particular sweat. Once wetted, due to this balance in properties, the horizontal polyester yarns will transport the liquid away in horizontal direction. Here, the hydrophobic nature of PET is helpful, since a completely hydrophilic material would simply absorb the liquid and more or less store it locally in the hydrophilic material until completely saturated. Also, the minimum porosity appears to be helpful, since at a lower porosity, capillary forces may be so high (due to the pores being narrower) to draw the liquid into the layer with too high forces. With the new external comfort layer, even when a sleeper is a heavy sweater, the layer maintains its dry feel for a very long time, increasing the experienced comfort of the mattress substantially. The same is true when using the comfort layer for example as a cover for a pillow. An additional advantage of the external layer, apart from the fact that it can be cleaned separately form the support items themselves, is that the comfort layer has a considerably shorter drying time that the support item when wetted to the same extent, since the moist is spread evenly over the top surface of the layer.

What additionally came as a surprise while testing the comfort layer is that patients suffering to a greater or lesser extent from bedsores. Bedsores, also called pressure ulcers or decubitus ulcers, are areas of broken skin that can develop in people who have been confined to bed for extended periods of time, or are unable to move for short periods of time, especially if they are thin or have blood vessel disease or neurological diseases. Bedsores are quite common in people in hospitals and nursing homes and in people being cared for at home. Bedsores form where the weight of the person's body presses the skin against the firm surface of the bed. This pressure, which does not have to be intense, temporarily cuts off the skin's blood supply which injures skin cells. Unless the pressure is relieved and blood flows to the skin again, the skin soon begins to show signs of injury. It was found now that when using the current comfort layer, bedsores develop less quickly, or not at all, and existing bedsores tend to heal. It may be that moist has an additional negative effect on the development of bedsores, which effect is mitigated when using the present comfort layer.

It is noted that the use of an outer polyester sheeting for a mattress as such is known from the art. However, in each case it is used as an outer hydrophobic layer in line with what is known form US 8,181,293. For example, US 5,735,145 discloses a multi-layer weft knit fabric for absorbing moisture and wicking it from a first fabric layer to a second layer is described, as well as a method for making the fabric. The multi-layer fabric includes an outer hydrophobic knitted polyester layer and a second hydrophilic layer, with the layers being secured together by a series of courses forming spacer yarns which maintain the fabric layers in a spaced relationship relative to each other. The spacer yarns are adapted to wick moisture from the hydrophobic polyester layer to the hydrophilic layer. The spacer yarns are preferably knit-in or laid-in to the respective knit fabric layers, and a plastic water-resistant layer is secured proximate the hydrophilic fabric layer to prevent that moisture enters the core. However, the presence of this plastic water-resistant layer decreases the comfort of the mattress significantly.

As another example, GB 2549634 discloses a mattress having a polyester outer layer which may be a knitted layer. However, this layer has no function in the process of transporting moist evenly over the footprint of the mattress. For that the mattress comprises a moisture transport layer and a moisture holding layer where the holding layer has a greater water absorbency by weight than the transport layer. The transport layer is formed of a pleated non-woven web of fibres which are in an anisotropic arrangement. In use the transport layer draws sweat away by capillary action and it is absorbed by the holding layer- it can then evaporate away when the mattress is not in use. The outer polyester layer is merely present to provide a good look and feel, and to partly prevent water to permeate into the mattress by repelling moist.

Another important advantage of the present invention came about when contemplating the idea of end users being capable of more easily supporting the recycling of mattresses. A common problem is that many people find it hard to take a mattress at its end of life to a recycling station, simply because the weight and dimension of a mattress do not allow easy transport in a regular car. A solution to this problem has bene devised in the art, namely by constructing a mattress out of multiple smaller segments that when connected laterally form the core of the mattress. At the end of life of the mattress, the segments can be separated from each other by which the mattress is turned smaller individual parts that can be taken to a recycling station much easier. This solution is known *i.a*. from US 5,092,008. The mattress is divided into four separate bag like segments. However, for comfort in case of sweat build up, each bag is provided with a drying agent. This is necessary since moist that enter one bag, cannot laterally spread since its transport is blocked by the border areas between neighbouring bags. There is thus an increased risk of moisture build up in one bag, necessitating the use of a drying agent per bag. However, this increases the production costs of a mattress, needs the use of a chemical drying agent, while at the same time the solution of local moist build up can only be mitigated to a low extent.

It was found that the present invention of using an external comfort layer is an alternative solution to the above problem. When this layer is provided on top of the constitution of the four separate bags, a transport means for moist form one bag to another has been created, overcoming the barrier that exists for moist transport in between the bags. This way, the use of a separate drying agent can be avoided, making recycling even more easy due to the fact that the chemical drying agent can be dispensed with. Also, the external comfort later provides the feel of a mattress that is of unitary construction, despite the fact that the mattress is made from several separate components.

The invention thus also pertains to a mattress covered with an external comfort layer as described here above, in particular to a combination of a mattress which comprises multiple separate laterally connected segments, which segments are reversibly connected and de-connectable by hand at room temperature, and an external comfort layer according to any of the preceding claims for covering a horizontally extending top surface of the mattress. Preferably, the mattress comprises 2 to 12 separate segments, more preferably 4 to 8 separate segments. This way there is a good balance between production costs, lying comfort and easy of disassembly and transport at the end of life of the mattress.

### Definitions

An article that is *ready-to-use* means that the article is prepared and available for immediate use by an end-user such as a consumer, or said otherwise, the article is capable of being used for the accomplishment of its intended purpose. Such an article is also denoted as "finished", "functional" or "ready to be used".

An external *comfort layer for a sleeping support* is on itself not suitable for supporting a sleeping person because due to lack of structure, or being too thin and/or too resilient, does not provide enough support (such that underlying, often hard surface will be felt by the human person). An additional separate comfort layer is purely meant as additional layer on an otherwise ready-to-use sleeping support item such as a mattress, cushion or pillow.

A *sleeping support item* is any item that can be used by a person to provide support for its body or parts thereof when sleeping, typically on bed, couch, sofa etc. Examples of such sleeping support item are mattresses, pillows, cushions etc.

A *through hole* in an item is a hole that goes through the entire item. This is in contrast to a blind or closed hole, which is a hole does not pass through the entire item.

A *sheeting* is a thin material having a small thickness dimension when compared to its length and width, typically at least 1:100, such as 1:150, 1:200, 1:300, 1:400, 1:500 or even 1:1000 or above, especially cloth or plastic used to cover something.

*Nano tape,* also called gecko tape (marketed e.g. under the name Alien Tape), is a synthetic adhesive tape consisting of arrays of carbon nanotubes transferred onto a backing material of flexible polymer tape. These arrays are called synthetic setae and mimic the nanostructures found on the toes of a gecko.

*Velcro* is a fabric fastener system that consists of two components: a lineal fabric strip with tiny hooks that can mate with another fabric strip with smaller loops, attaching temporarily, until pulled apart. The fastener strips are mostly constructed of nylon or polyester.

*Mushroom tape* is a woven grade of material with mushroom-shaped hooks providing a high vertical tensile strength for strong bonding to a textile material. Such tape is typically used for securing carpet to a solid underground.

The *porosity* of an item, also called void fraction, is a measure of the void (i.e. "empty") spaces in the item, and is a fraction of the volume of voids over the total volume, between 0% and 100%.

A *three-dimensional reticulated* material is a material that consists of a network of strings of solid material in a continuum of gas (air), as opposed to foam which is a dispersion of gas bubbles in a continuum of solid material (which continuum of solid material in case of a mattress is usually latex rubber, polyether or polyurethane).

A *mattress* is a fabric case comprising a core of or containing a resilient material (such as for example cotton, hair, feathers, foam rubber, or an arrangement of springs) used either alone as a bed or on a bedstead to support a person sleeping thereon. The core supports the sleeper's body. Spring mattress cores, often called "innersprings," are made up of steel coil springs, or "coils." In foam mattresses, a rectangular piece of thick foam is used as the core.

*A porous* material is a material that has an open texture such that a liquid, in particular a water-based liquid, further in particular human sweat, can freely enter the material.

A *ticking* of a mattress is the outer layer that covers the resilient core of the mattress, which ticking provides for comfort and prevents excessive wear of the core. A ticking is typically made of upholstery fabric, i.e. cloth typically used for covering furniture.

A *continuous* layer is a layer forming an unbroken whole, without any apparent interruptions in its structure.

A *polyester* is a polymer in which the monomer units are linked together by an ester group. They are typically formed by polymerizing a polyhydric alcohol with a polybasic acid, and used mainly in the manufacture of resins, plastics, and textile fibres. Polyester as used in ever-day live can be aliphatic, semi-aromatic or aromatic. Typical examples are polyglycolic acid (PGA), polylactic acid (PLA), polycaprolactone (PCL), polyhydroxyalkanoate (PHA), polyhydroxybutyrate (PHB), polyethylene adipate (PEA), polybutylene succinate (PBS), poly(3-hydroxybutyrate-co-3-hydroxyvalerate) (PHBV), polyethylene terephthalate (PET), polybutylene terephthalate (PBT), polytrimethylene terephthalate (PTT), polyethylene naphthalate (PEN) and Vectran, a polycondensation product of 4-hydroxybenzoic acid and 6-hydroxynaphthalene-2-carboxylic acid. Of these PET, also abbreviated as PETE, or the obsolete PETP or PET-P, is a common thermoplastic polymer resin of the polyester family. It is also referred to by brand names such as Terylene, Arnite, Eastapac, Mylar, Lavsan, Dacron etc.

A *polyester* material or item is a material or item which in essence is composed of polyester, meaning that over 50 weight % of its polymer content is polyester polymer, preferably over 60, 70, 80, 85, 90, 91, 92, 93, 94, 95, 96, 97, 98, 99 or even to 100% of its polymer content, and up to 10% (e.g. 0, 1, 2, 3, 4, 5, 6, 7, 8, 9, 10) of additives like fillers (e.g. fibrous like material or particulate matter), stabilisers, colorants etc. Thus, a PET material is a material of which over 50 weight % of its polymer content is PET.

*Knitting* is a process to form a fabric by interlacing yarn in a series of connected loops, typically using multiple needles. One continuous yarn can be used but also multiple different yarns. Not all yarns need to have the exact same composition. Knitting differs from the creation of woven fabrics which require a loom or other heavy equipment and involve making fabric with a much higher number of threads and a much closer weave. Knitted fabrics tend to be stretchier and heavier than woven ones, with a very different texture.

A *three-dimensional reticulated* material is a material that consists of strings of solid material in a continuum of gas (air), as opposed to foam which is a dispersion of gas bubbles in a continuum of solid material (which continuum of solid material in case of a mattress is usually latex rubber, polyether or polyurethane).

A process performed *by hand* means done with one's hands only (i.e. manually) in the sense that no tools are needed, using only the force of hand.

### Further embodiments of the invention

In a first further embodiment of the external comfort layer according to the invention, the pores are constituted as through holes that extend through the complete core from the top surface to a bottom surface of this core. This increases the moisture absorption capacity of the core and hence the effect of leading moist away from its site of origin, and minimising the risk of the comfort layer still attaining a wet feel locally.

In yet another embodiment, the sheeting has a weight of between 0.05 g/cm³ and 0.5 g/cm³. For a woven or knitted sheeting this corresponds roughly to above 150 to 650 g/m² in an uncompressed state. It was found that at this weight, horizontal transport of absorbed moist is optimal, in combination with a comfortable feel of the layer. Preferably, the weight of the polyester sheeting is between 0.075 g/cm³ and 0.3 g/cm³ (corresponding to 200-400 g/m² for a woven or knitted sheeting), most preferably between 0.1 g/cm³ and 0.2 g/cm³ (250-350 g/m² for a woven or knitted sheeting).

In still another embodiment the polyester yarns that extend in horizontal direction are comprised in a woven or non-woven structure, preferably in a knitted polyester fabric. In such a fabric, the yarns are continuous in horizontal direction and thus, moist transport along these yarns is uninterrupted mechanically, further improving transport properties. In effect this means that a less dense and thick sheeting (and thus a sheeting with a lower carbon footprint, and potentially less expensive) can be used for effective lateral moist transport.

In again another embodiment of the external comfort layer according to the invention, the porous core has a porosity of at least 86, 87, 88, 89, 90, 91, 92, 93, 94, 95, 96, 97, 98 or even 99%. The optimum porosity for an average sleeper has been found to be between 90% and 95%.

In yet again another embodiment the porous core comprises (or even is) a three-dimensional reticulated material. In the art foam is the material of choice for a porous (comfort) layer. An alternative type of material that has become available in the art as a material that can be used in or as a comfortable layer are the so-called three dimensional reticulated materials such as for example ZenXit^{®} of Gabriel, Aalborg Denmark, AirSkin^{®} spacer fabric of Springs Creative Products Group, Rock Hill, SC, USA, or 3Mesh of Muller Textil GmbH, Wiehl, Germany. These materials are very open and hence believed to be advantageous over foam when it comes down to allowing moist to be absorbed while at the same time allowing air to pass through which not only improves the moist absorbing properties abut also enhances the comfortable feeling.

In an embodiment the layer has a thickness of at most 10 cm, preferably less than 5 cm. For the use in combination with a pillow, the thickness is preferably less than 1 cm, such as for example 1-5 mm.

In yet another embodiment both the porous core and the sheeting are packed in a woven slipcover, the woven slipcover preferably being woven of polyester yarns. A slipcover may prevent staining of the comfort layer itself, and may provide a unitary look and feel of the external comfort layer which otherwise exists of two very distinct layers, namely the porous core and the sheeting.

Preferably the comfort layer covers the complete top surface of the ready-to-use sleeping support item.

Also preferred is that the comfort layer cover is removably connected to the top surface of the ready-to-use sleeping support item, such as for example by using Velcro, gecko-tape, mushroom tape or a zipper.

In the combination of the external comfort layer and a mattress, a further improvement is possible in that the mattress comprises multiple elongated thermal conductors that extend from a position adjacent the comfort layer to a position adjacent a bottom surface of the mattress, wherein the elongated thermal conductors are polymer fibres, preferably of an oriented strand polymer. It was found that the presence of such thermal conductors can even further increase the comfort of the mattress, mainly by preventing or mitigating local heat build-up when a person is lying on the mattress and thus preventing or decreasing the amount of sweat produced. This way, even persons that normally are considered heavy sweaters can sleep for a long time without the mattress getting locally saturated with moist. As stated, the elongated thermal conductors are fibres, preferably polymer fibres. Fibres have the advantage that they may have little influence on the bulk properties of the polymer. Polymer conductors have found to be suitable for use in a mattress according to the invention. Although inherently being worse thermal conductors than for example (most) metal or carbon fibres, the heat conductivity of polymers may suffice for the current application, in particular when using an oriented strand polymer like Dyneema^{®} (Avient, Geleen, The Netherlands). Such polymers have a very high heat conductivity and still have the mechanical properties (in particular the flexibility and density) of a polymer making them ideally suitable for incorporation as thermal conductors in a mattress, without interfering too much with the mechanical bulk properties of the core of the mattress.

The invention will now be further explained using the following specific examples.

### Examples

Figure 1 is a schematic top plan view of a mattress provided with a separate external comfort layer according to the invention.
Figure 2 is a cross section along the line indicated with Roman I in figure 1.

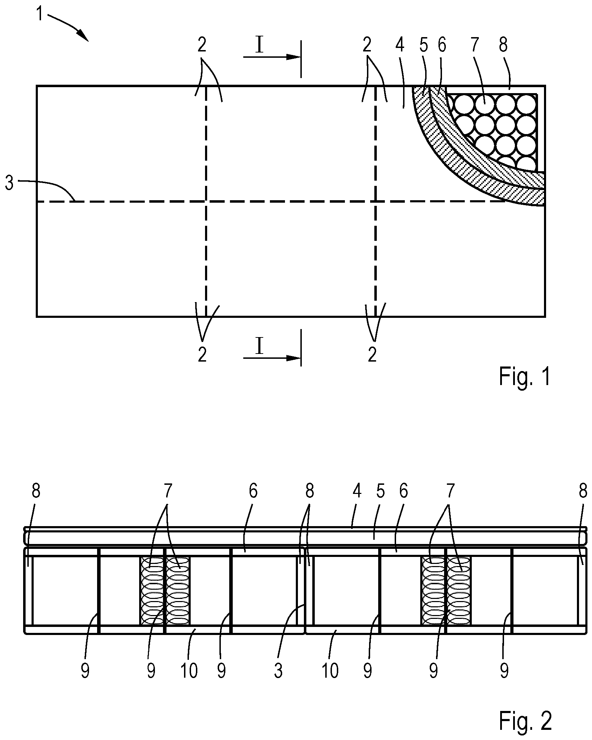

Example 1 is a brief description of a method of manually disassembling the combination of the comfort layer and mattress of figure 1.

### Figure 1

Figure 1 is a schematic top plan view of a combination 1 of a mattress and separate topper according to the invention. The mattress itself is comprised of 6 identical segments 2, that are contiguous along borders 3. Each segment comprises a rectangular foam casing 8, which casing is filled with pocketed springs 2, and closed with a ticking 6 (it is note that the type of mattress is not essential for the functioning of the topper). At these borders the different segments are releasably mechanically connected by using so called mushroom tape, a tape that comprises multiple adhesive mushroom shaped hooks (such tape is for example obtainable from KragoTEC, Krefeld, Germany and Interfloor, Rossendale, UK). The foam has resilience properties that are virtually equal to those of the pocketed springs. Still, if no continuous external comfort layer would be provided over the set of segments 2, a person lying on the mattress may notice a difference in resilience at any of the borders 3 due to the presence of the double foam casings and the mushroom tape.

In order to increase comfort, the mattress is covered by a continuous external comfort layer, which covers the whole of the top surface of the mattress. This comfort layer consists of a knitted PET sheeting 4 and an underlying porous PET core 5 (in this case the polymer content of the PET materials is about 100% of polyethylene terephthalate). The comfort layer is removably connected to the mattress using Velcro (not shown in figure 1). The polyester sheeting 4 is obtainable as Caliweb^{®} from TWE, Emsdetten, Germany, and has a thickness of about 1½ mm (after being calandered). The weight of this knitted polyester layer is about 300 g/m². The porous core 5 is a layer made of a three-dimensional reticulated material obtainable as 3Mesh from Muller Textil GmbH, Wiehl, Germany, and has a thickness of about 2 cm and having a porosity of 95%. Optionally, a further layer of such a reticulated material is applied to constitute a thicker core if desired to increase the comfort. Such multiple core layers may on their turn be put directly on top of each other, or separated, for example by a sheeting or other layer. Also, not indicated in figure 1, the package of sheeting 4 and core 5 may be put in a relatively tight woven cover.

The polyester topper is able to conveniently spread any bodily fluid that is excreted by a person lying on the mattress over its surface, this way providing more comfort. Also, the total amount of fluid, due to being spread will dry relatively fast, due to less locally high amounts of fluid. The topper can be cleaned separately from the mattress, simply by putting it in a washing machine. This increases the hygiene without negatively interfering with the sleeping comfort.

In an alternative embodiment the sheeting is a non-woven PET felt layer, having a thickness of for example 1-5 mm. Such a sheeting has a higher capacity to absorb and spread higher concentrations of body fluids, but also, has a harder feel than a thin knitted layer. The most appropriate type of sheeting depends on the desired properties and may be a compromise between hand, resilience and fluid spreading properties. Also, such a non-woven PET layer may be used as a bottom sheeting for the topper, or even an intermediate sheeting of multiple cores are laid on top of each other. It was found that a felted PET layer having a weight of about 450 g/m² (typically between 350 and 550 g/m₂) is suitable as a bottom layer. This is in particular useful if the mattress is segmented as indicated in figure 1.

A corresponding separate external comfort layer could be applied to any sleeping support such as for example a pillow. The reticulated layer chosen for a pillow is typically thinner, such as any of the thin 3Mesh layers as available from Muller Textil (e.g. 1-3 mm). Several 3Mesh layers were tested, a 1.7 mm thick layer (weight 230 g/m²; porosity 90%), a 3.2 mm thick layer (weight 265 g/m²; porosity 94%) and a 5.5 mm thick layer (weight 570 g/m²; porosity 92%), all providing very good moist absorbing and transporting properties. When a porosity below 85% is used, the comfort is such that the average sleeper may notice some local moist build up, thereby decreasing the comfort.

### Figure 2

Figure 2 is a cross section along the line indicated with Roman I in figure 1. As can be seen, layers 5 and 6 of the external comfort layer are continuous with respect to the segments 2, they are not interrupted at the borders 3 between the two segments 2.

This way, a border zone between the various segments 2 will not be felt by a person lying on the mattress. Depending i.a. on the weight of the person however, or the amount of body fluid excretion during lying on the combination, a thicker or thinner porous core can be used if deemed necessary.The various parts as shown in Figure 1 can be easily identified. For reasons of clarity, per segment only 2 pocketed springs are depicted.

Figure 2 also shows the presence of elongated thermal conductors 9 (Dyneema^{®}, as obtainable from Avient, Geleen, The Netherlands) than run from just below the ticking 6 to the felt base layer 10 of the mattress in order to conduct heat from the top of the mattress to the base layer 10. This way, the top of the mattress stays and feels cooler when a person is lying on the bed. Although indicated in Figure 2 as evenly spread over the width of the mattress, it is envisaged that the position and number of the thermal conductors is adapted to typical sleeping positions of people, or even to individual needs.

### Example 1

Example 1 is a brief description of a method of manually disassembling a combination of the mattress and external comfort layer (existing of sub-layers 4 and 5) of figure 1. At the end-of-life of the mattress, the owner/user can easily remove the external comfort layer by pulling it from the mattress by hand. What is the left are the six segments 2 which are interconnected by the mushroom tape. This connection is reversible using hand force. By pulling each individual segment away from its neighbours, it can be easily separated from the remainder of the mattress. In the end, what is left is a separate external comfort layer which is light and can be folded into a small package (and discarded if necessary, or otherwise kept if still OK) and 6 small segments 2. These latter parts as such are relatively small and can be taken easily to a recycling station by a person in a standard car.

## Claims

1. An external comfort layer for covering a horizontally extending top surface of a ready-to-use sleeping support item, the external comfort layer comprising a porous polyester core having a porosity of at least 85% and having pores that are open towards a top surface of the said core, and a continuous polyester sheeting covering the top surface of the porous polyester core, the polyester sheeting having polyester yarns that extend in the horizontal direction, and wherein both the porous polyester core and the continuous polyester sheeting are polyethylene terephthalate (PET) materials.

2. An external comfort layer according to claim 1, **characterised in that** the pores are constituted as through holes that extend through the complete core from the top surface to a bottom surface of this core.

3. An external comfort layer according to any of the preceding claims, **characterised in that** the sheeting has a weight of between 0.05 g/cm³ and 0.5 g/cm³, preferably between 0.075 g/cm³ and 0.3 g/cm³, more preferably between 0.1 g/cm³ and 0.2 g/cm³.

4. An external comfort layer according to any of the preceding claims, **characterised in that** the polyester yarns that extend in horizontal direction are comprised in a woven or non-woven structure.

5. An external comfort layer according to any of the preceding claims, **characterised in that** the polyester yarns that extend in horizontal direction are comprised in a knitted polyester fabric.

6. An external comfort layer according to any of the preceding claims, **characterised in that** the porous core has a porosity of between 90% and 95%.

7. An external comfort layer according to any of the preceding claims, **characterised in that** the porous core comprises a three-dimensional reticulated material.

8. An external comfort layer according to any of the preceding claims, **characterised in that** the layer has a thickness of at most 10 cm, preferably less than 5 cm.

9. An external comfort layer according to any of the preceding claims, **characterised in that** both the porous core and the sheeting are packed in a woven slipcover, the woven slipcover preferably being woven of polyester yarns.

10. An external comfort layer according to any of the preceding claims, **characterised in that** the comfort layer covers the complete top surface of the ready-to-use sleeping support item.

11. An external comfort layer according to any of the preceding claims, **characterised in that** the comfort layer cover is removably connected to the top surface of the ready-to-use sleeping support item.

12. An external comfort layer according to claim 11, **characterised in that** the comfort layer cover is removably connected to the top surface of the ready-to-use sleeping support item, by using Velcro, nano tape, mushroom tape or a zipper.

13. A combination of a mattress which comprises multiple separate laterally connected segments, which segments are reversibly connected and de-connectable by hand at room temperature, and an external comfort layer according to any of the preceding claims for covering a horizontally extending top surface of the mattress.
